# EUROPÄISCHE PATENTSCHRIFT

(11) **EP 1 203 786 B1**
(45) Veröffentlichungstag und Bekanntmachung des Hinweises auf die Patenterteilung: **04.08.2004**
(21) Anmeldenummer: 01124336.7
(22) Anmeldetag: 22.10.2001
(51) Int. Cl.: C08K 5/5398, C08L 21/00

(54) **Mikrogelhaltige Kautschukmischungen mit Phosphorylpolysulfiden und hieraus hergestellte Vulkanisate bzw. Formkörper**
Rubber composition containing microgel and phosphorylpolysulfides and vulcanised products or molded articles thereof
Composition de caoutchouc à base de microgel contenant des polysulfures de phosphoryle et produits vulcanisés, ou articles moulés, dérivés de cette composition

(30) Priorität: 03.11.2000 DE 10054533
(43) Veröffentlichungstag der Anmeldung: 08.05.2002
(73) Patentinhaber: Rhein Chemie Rheinau GmbH, 68219 Mannheim (DE)
(72) Erfinder: Obrecht, Werner, Dr., 47447 Moers (DE); Jeske, Winfried, 51399 Burscheid (DE); Früh, Thomas, Dr., 67061 Ludwigshafen (DE); Heiliger, Ludger, Dr., 67433 Neustadt (DE)
(74) Vertreter: Roos, Peter

(56) Entgegenhaltungen:
- EP-A- 0 767 205
- EP-A- 0 854 170
- EP-A- 1 029 866

## Beschreibung

Die Erfindung betrifft Kautschukmischungen auf der Basis von Kautschukpartikeln und Phosphorylpolysulfiden und/oder bestimmten Dlthiophosphaten sowie hieraus hergestellte Vulkanisate bzw. Formkörper. Durch den Zusatz der Phosphorylpolysulfide und/oder der Dithiophosphate wird die Verstärkungswirkung der Kautschukpartikel insbesondere das Produkt S₃₀₀ x D aus Spannungswert bei 300% Dehnung (S₃₀₀) und Bruchdehnung (D) ohne Einbußen bei der Rückprallelastizität hieraus hergestellter Vulkanisate verbessert.

Zur Verbesserung der mechanischen Eigenschaften vulkanisierter Gummiartikel setzt man Füllstoffe ein. Die größte technische Bedeutung haben Ruße und Kieselsäuren. Durch den Einsatz der Füllstoffe erzielt man höhere Vulkanisathärten, höhere Spannungswerte sowie höhere Festigkeiten als bei den entsprechenden ungefüllten Vulkanisaten. Entsprechend der Verstärkungswirkung der Füllstoffe unterscheidet man zwischen inaktiven, aktiven und hochaktiven Füllstoffen. Insbesondere bei den anorganischen Füllstoffen nimmt man wegen ihres höheren spezifischen Gewichts (Ruß: 1,8 g/cm³; Kieselsäure: 2,1 g/cm³) Nachteile beim Gewicht hieraus hergestellter Kautschukartikel In Kauf.

Der Einsatz von Mikrogelen als Füllstoff wird in folgenden Patentanmeldungen bzw. Patenten beschrieben: EP-A 405 216, DE-A 4 220 563, GB-PS 1 078 400, DE-A 197 01 489 EP-A 432 405 und EP-A 432 417. In den Patent(anmeldungen) EP-A 405 216, DE-A 4220 563 sowie in GB-PS 1078400 wird die Verwendung von CR-, BR- und NR-Mikrogelen in Mischungen mit doppelbindungshaltigen Kautschuken beansprucht. Die Rückprallelastizltäten der gelgefüllten Vulkanisate insbesondere bei 70°C ist vorteilhaft. Für den technischen Einsatz ist die Verstärkungswirkung der Mikrogele (Modul) nicht ausreichend. Dies zeigt sich insbesondere daran, dass zur Einstellung technisch relevanter Modulbereiche hohe Gelmengen eingesetzt werden müssen. Durch diese hohen Gelmengen kommt es zu einer Überfüllung der Mischungen, wodurch die Bruchdehnungen beeinträchtigt werden. Es bestand daher die technische Notwendigkeit, bei gelgefüllten Vulkanisaten Maßnahmen zur Erhöhung des Produkts aus Spannungswert bei 300 % Dehnung (S₃₀₀) und Bruchdehnung (D), ohne gleichzeitige Verschlechterung der Rückprallelastizität bei 70°C zu finden.

Die Verwendung von Phosphorylpolysulfiden in Kautschukcompounds ist dem Produktinformationsblatt der Rhein Chemie Rheinau GmbH Rhenocure® SDT/S "Konfektionierte Kautschukchemikalien und Additive" Ausgabe 09.99 zu entnehmen. Der Verwendungszweck der Phosphorylpolysulfide wird als nicht-verfärbender Schwefelspender für die Vulkanisation von Natur- und Synthesekautschuk gesehen. Phosphorylpolysulfide wirken als Schwefelspender, die zu mono- und disulfidischen Vernetzungsbrücken mit guter Reversionsbeständigkeit bei der Vulkanisation sowie bei vulkanisierten Artikeln führen. In dem Produktinformationsblatt wird die Verwendung der Phosphorylpolysulfiden zur Verbesserung der Verstärkungswirkung gelgefüllter Vulkanisate jedoch nicht gelehrt. Die EP 0767205 offenbart Kautschukmischungen, die Dithiophosphorsöurepolysulfide enthalten.

Es wurde jetzt gefunden, dass durch Zusätze von Phosphorylpolysulfiden und/oder bestimmten Dithiophosphaten zu Kautschukcompounds, die Kautschukgele enthalten, sowohl der Spannungswert bei 300 % Dehnung als auch das Produkt aus S₃₀₀ und Bruchdehnung (S₃₀₀ x D) ohne Einbußen bei der Rückprallelastizität bei 70°C verbessert wird.

Gegenstand der Erfindung sind daher Kautschukmischungen aus mindestens einem doppelbindungshaltigen Kautschuk (A), mindestens einem Kautschukgel (B) und mindestens einer Komponente (C), ausgewählt aus der Gruppe, die aus einem Phosphorylpolysulfid und einer Verbindung der allgemeinen Formel (II) 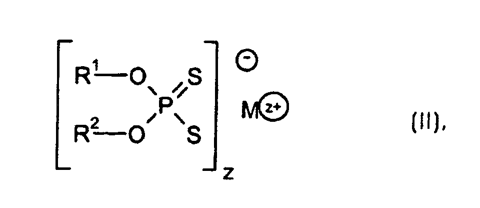 besteht, worin
R¹ und R² gleich oder verschieden sind und für aliphatische, heteroallphatische, aromatische und heteroaromatische Substituenten mit 1 bis 24 C-Atomen, und 1 bis 4 Heteroatome stehen, z für ganze Zahlen von 1 bis 3 steht, und M^{z+} ein Metallkation mit der Ladung z⁺, mit z⁺ = 1 bis 3, bedeutet,
wobei der Anteil an doppeibindungshaltigem Kautschuk (A) 100 Gew.-Teile, der Anteil an Kautschukgel (B) 5 bis 150 Gew.-Teile und der Anteil an Komponente (C) 0,1 bis 10 Gew.-Teile beträgt, sowie gegebenenfalls weiteren Füllstoffen und Kautschukhilfsmitteln.

Bevorzugt beträgt der Anteil an Kautschukgel (B) in den Mischungen 20 bis 100 Gew.-Teile und der Anteil an Komponente (C) 0,5 bis 7 Gew.-Teile.

Unter doppelbindungshaltigem Kautschuk versteht man die Kautschuke, die nach DIN/ISO 1629 als R-Kautschuke bezeichnet werden. Diese Kautschuke haben in der Hauptkette eine Doppelbindungen. Hierzu gehören z.B.:
- NR:: Naturkautschuk
- SBR:: Styrol/Butadienkautschuk
- SIBR:: Styrol/Isopren/Butadienkautschuk
- SNBR:: Styrol/Acrylnitril/Butadienkautschuk
- BR:: Polybutadienkautschuk
- NBR:: Nitrilkautschuk
- IIR:: Butylkautschuk
- HNBR:: Hydrierter Nitrilkautschuk
- SNBR:: Styrol/Butadien/Acrylnitril-Kautschuk
- CR:: Polychloropren

Unter doppelbindungshaltigen Kautschuken sollen aber auch Kautschuke verstanden werden, die nach DIN/ISO 1629 M-Kautschuke sind und neben der gesättigten Hauptkette Doppelbindungen in Seitenketten aufweisen. Hierzu gehört z.B. EPDM.

Unter Kautschukpartikeln (B) werden Kautschukgele, auch Mikrogele bzw. Gele genannt, verstanden, die durch Vernetzung folgender Kautschuke erhalten werden:
- BR:: Polybutadien,
- ABR:: Butadien/AcrylsäureC1-4Alkylestercopolymere,
- IR:: Polyisopren,
- SBR:: Styrol-Butadien-Copolymerisate mit Styrolgehalten von 1-60, vorzugsweise 2-50 Gewichtsprozent,
- X-SBR:: carboxylierte Styrol-Butadien-Copolymerisate,
- FKM:: Fluorkautschuk,
- ACM:: Acrylatkautschuk,
- NBR:: Polybutadien-Acrylnitril-Copolymerisate mit Acrylnitrilgehalten von 5-60, vorzugsweise 10-50 Gewichtsprozent,
- X-NBR:: carboxylierte Nitrilkautschuke,
- CR:: Polychloropren,
- IIR:: Isobutylen/Isopren-Copolymerisate mit Isoprengehalten von 0,5 bis 10 Gewichtsprozent,
- BIIR:: bromierte Isobutylen/Isopren-Copolymerisate mit Bromgehalten von 0,1-10 Gewichtsprozent,
- CIIR:: chlorierte Isobutylen/Isopren-Copolymerisate mit Bromgehalten von 0,1-10 Gewichtsprozent,
- HNBR:: teil- und vollhydrierte Nitrilkautschuke,
- EPDM:: Ethylen-Propylen-Dien-Copolymerisate,
- EAM:: Ethylen/Acrylatcopolymere,
- EVM:: Ethylen/Vinylacetatcopolymere,
- ECO:: Epichlorhydrinkautschuk,
- Q:: Silikonkautschuke,
- AU:: Polyesterurethanpolymerisate,
- EU:: Polyetherurethanpolymerisate,
- ENR:: Epoxydierter Naturkautschuk oder Mischungen davon.
- Bevorzugt sind:: CR, NR, NBR, BR sowie SBR Gele.

Die Mikrogele besitzen Teilchendurchmesser von 5-1000 nm, bevorzugt 20-600 nm (DVN-Wert nach DIN 53 206). Aufgrund ihrer Vernetzung sind sie unlöslich und in geeigneten Quellmitteln wie z.B. Toluol quellbar. Die Quellungsindizes der Mikrogele (Qₗ) in Toluol betragen 1-15, vorzugsweise 1-10. Der Quellungsindex wird aus dem Gewicht des lösungsmittelhaltigen Gels (nach Zentrifugation mit 20.000 Upm) und dem Gewicht des trockenen Gels berechnet:
Qₗ = Nassgewicht des Gels/Trockengewicht des Gels.

Zur Ermittlung des Quellungsindex lässt man 250 mg Gel in 25 ml Toluol 24 h unter Schütteln quellen. Das Gel wird abzentrifugiert und gewogen und anschließend bei 70°C bis zur Gewichtskonstanz getrocknet und nochmals gewogen.

Die Herstellung der einzusetzenden vernetzten Kautschukpartikel (Kautschukgele) aus den zugrundeliegenden Kautschuken der zuvor genannten Art, ist prinzipiell bekannt und beispielsweise beschrieben in US-A 5 395 891 und EP-A 981 000 49.0.

Außerdem ist es möglich, die Teilchengrößen der Kautschukpartikel durch Agglomeration zu vergrößern. Auch die Herstellung von Kieselsäure/Kautschuk-Hybridgelen durch Coagglomeration ist beispielsweise beschrieben in der deutschen Patentanmeldung Nr. 199 39 865.8.

Selbstverständlich können die vernetzten Kautschukpartikel durch geeignete funktionelle Gruppen modifiziert sein.

Die Modifizierung der vernetzten Kautschukpartikel (Kautschukgele) und die Einführung der zuvor genannten funktionellen Gruppen ist dem Fachmann ebenfalls bekannt und beispielsweise beschrieben in den deutschen Patentanmeldungen Nr. 199 19 459.9, 199 29 347.3, 198 34 804.5.

Die Phosphorylpolysulfide (C) leiten sich von folgendem Grundkörper ab: 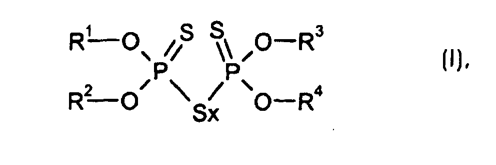 die Dithiophosphate weisen die Formel 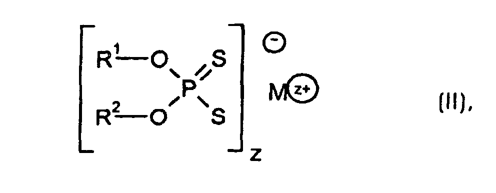 auf, worin
- R¹, R², R³ und R⁴: gleich oder verschieden sind und für aliphatische, heteroaliphatische, aromatische und heteroaromatische Substituenten mit 1 bis 24, bevorzugt 1 bis 18 C-Atomen, und 1 bis 4 Heteroatome, wie N, S, O, stehen,
- x: für ganze Zahlen von 1 bis 8, bevorzugt 3 bis 6 steht,
- z: für ganze Zahlen von 1 bis 3, bevorzugt 1 bis 2 steht,
und
- M^{z+}: ein Metallkation mit der Ladung z⁺, mit z⁺ = 1 bis 3, bevorzugt 1 und 2, bedeutet.

Folgende Metalle kommen in Frage:
Li, Na, K, Rb, Cs, Be, Mg, Ca, Sr, Ba, Al, Nd, Zn, Cd, Ni und Cu.

Bevorzugt sind: Na, K, Zn und Cu.

Folgende Phosphorylpolysulfide sind von besonderem Interesse: 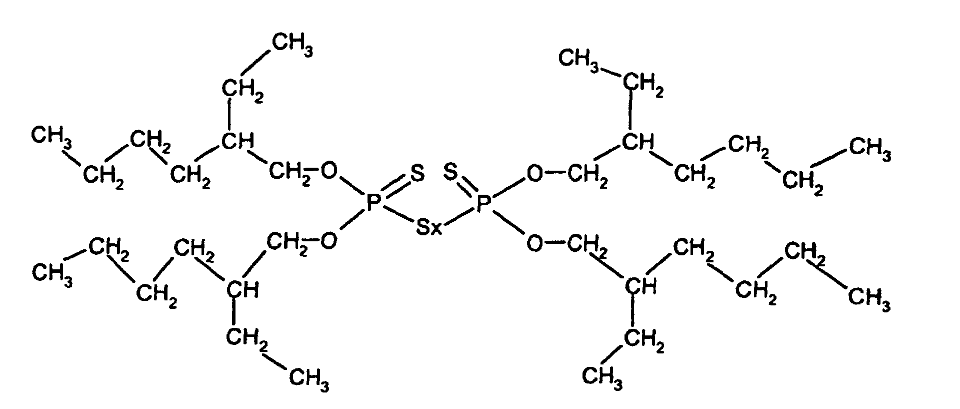 mit
x = 2 bis 4.

(Die Verbindung ist als Rhenocure® SDT/G gebunden an 30 Gew.-% hochaktive Kieselsäure der Fa. Rheinchemie im Handel).

Folgende Verbindung der Formel (II) ist von besonderem Interesse:

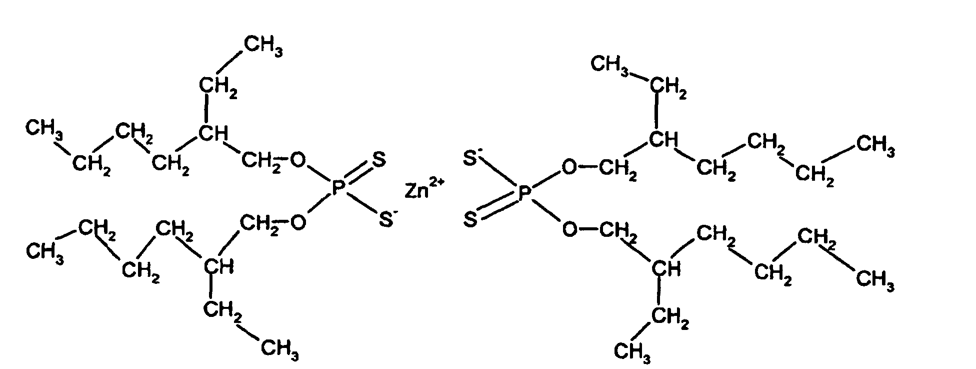

(Die Verbindung ist als Rhenocure® ZDT/G gebunden an 30 Gew.-% hochaktive Kieselsäure und 20 Gew.-% Polymerbinder der Fa. Rheinchemie im Handel).

Die erfindungsgemäßen Kautschukmischungen aus doppelbindungshaltigem Kautschuk (A), Kautschukgel (B) und Komponente (C) können zusätzliche weitere Komponenten wie Füllstoffe enthalten:

Besonders geeignete Füllstoffe zur Herstellung der erfindungsgemäßen Kautschukmischungen und -vulkanisate sind
- Ruße. Die hierbei zu verwendenden Ruße sind nach dem Flammruß-, Furnace- oder Gasrußverfahren hergestellt und besitzen BET-Oberflächen von 20-200 m²/g wie z.B.: SAF-, ISAF-, IISAF-, HAF-, FEF- oder GPF-Ruße.
- hochdisperse Kieselsäure, hergestellt z.B. durch Fällungen von Lösungen von Silikaten oder Flammhydrolyse von Siliciumhalogeniden mit spezifischen Oberflächen von 5-1000, vorzugsweise 20-400 m²/g (BET-Oberfläche) und Primarteilchengrößen von 5-400 nm. Die Kieselsäuren können gegebenenfalls auch als Mischoxide mit anderen Metalloxiden, wie Al-, Mg-, Ca-, Ba, Zn- und Ti Oxiden vorliegen.
- synthetische Silikate, wie Aluminiumsilikat, Erdalkalisilikat, wie Magnesiumsilikat oder Calciumsillkat mit BET-Oberflächen von 20-400 m²/g und Primärteilchendurchmessern von 5-400 nm.
- natürliche Silikate, wie Kaolin und andere natürlich vorkommende Kieselsäuren.
- Metalloxide, wie Zinkoxid, Calciumoxid, Magnesiumoxid, Aluminiumoxid.
- Metallcarbonate, wie Calciumcarbonat, Magnesiumcarbonat, Zinkcarbonat.
- Metallsulfate, wie Calciumsulfat, Bariumsulfat.
- Metallhydroxide, wie Aluminiumhydroxid und Magnesiumhydroxid.
- Glasfasern und Glasfaserprodukte (Latten, Stränge oder Mikroglaskugeln).
- Thermoplastfasern (Polyamid, Polyester, Aramid)
- Thermoplastische Füllstoffe, wie Polyethylen, Polypropylen, Polytetrafluorethylen, syndiotaktisches 1,2-Polybutadien, trans-1,4-Polybutadien, syndiotaktisches Polystyrol und Polycarbonat.

Die genannten Füllstoffe können allein oder im Gemisch eingesetzt werden. In einer besonders bevorzugten Ausführung des Verfahrens werden 10-100 Gewichtsteile Kautschukgel (B), gegebenenfalls zusammen mit 0,1-100 Gewichtsteilen Ruß und/oder 0,1-100 Gewichtsteilen hellen Füllstoffen, jeweils bezogen auf 100 Gewichtsteile unvernetzten Kautschuks eingesetzt.

Die erfindungsgemäßen Kautschukmischungen können weitere Kautschukhilfsmittel enthalten, wie z.B. Vernetzer, Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachs, Streckmittel, organische Säuren, Verzögerer, Metalloxide, sowie Füllstoffaktivatoren, wie beispielsweise Triethanolamin, Polyethylenglykol, Hexantriol, Bis-(triethoxisilylpropyl)-Tetrasulfid oder anderen, die der Gummiindustrie bekannt sind.

Die Kautschukhilfsmittel werden in üblichen Mengen, die sich u.a. nach dem Verwendungszweck richten, eingesetzt. Übliche Mengen sind z.B. Mengen von 0,1-50 Gewichtsprozent, bezogen auf eingesetzte Mengen an Kautschuk (A).

Als übliche Vernetzer können Schwefel, Schwefelspender, Peroxide oder Vernetzungsmittel, wie beispielsweise Dilsopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid und/oder Triallyltrimellitat verwendet werden. Darüber hinaus kommen in Betracht die Acrylate und Methacrylate von mehrwertigen, vorzugsweise 2 bis 4-wertigen C₂ bis C₁₀ Alkoholen, wie Ethylenglykol, Propandiol-1,2,butandiol, Hexandiol, Polyethylenglykol mit 2 bis 20, vorzugsweise 2 bis 8 Oxyethyleneinheiten, Neopentylglykol, Bisphenol-A, Glycerin, Trimethlypropan, Pentaerythrit, Sorbit mit ungesättigten Polyestern aus aliphatischen Di- und Polyolen sowie Maleinsäure, Fumarsäure, und/oder Itaconsäure.

Die erfindungsgemäßen Kautschukmischungen können darüber hinaus Vulkanisationsbeschleuniger enthalten. Beispiele für geeignete Vulkanisationsbeschleuniger sind z.B. Mercaptobenzthlazole, -sulfenamide, Guanidine, Thiurame, Dithiocarbamate, Thioharnstoffe und Thiocarbonate bevorzugt sind Mercaptobenzthiazylsulfenamide und Guanidine. Die Vulkanlsationsbeschleuniger, Schwefel und Schwefelspender oder Peroxide oder weitere Vernetzungsmittel, wie beispielsweise dimeres 2,4-Toluyiiden-di-isocyanat (= Desmodur TT) oder 1,4-bis-1-ethoxyhydrochinon (= Vernetzer 30/10), werden in Mengen von 0,1-40 Gewichtsprozent, bevorzugt 0,1-10 Gewichtsprozent, bezogen auf die gesamte Menge an Kautschuk eingesetzt. Bevorzugt wird Schwefel eingesetzt.

Die Vulkanisation der erfindungsgemäßen Kautschukmischungen kann bei Temperaturen von 100-250°C, bevorzugt 130-180°C, gegebenenfalls unter Druck von 10-200 bar erfolgen.

Die erfindungsgemäßen Kautschukmischungen aus ungesättigtem Kautschuk (A), Kautschukgel (B) und Komponente (C) können auf verschiedene Arten hergestellt werden:

Zum einen ist es selbstverständlich möglich, die festen Einzelkomponenten zu mischen. Dafür geeignete Aggregate sind beispielsweise Walze, Innenmischer oder auch Mischextruder. Aber auch das Mischen durch Vereinigen der Latices der unvernetzten oder auch der vernetzen Kautschuke ist möglich. Isolierung der so hergestellten erfindungsgemäßen Mischung kann wie üblich, durch Eindampfen, Ausfällen oder Gefrierkoagulation (vgl. US-A-2,187,146) erfolgen. Durch Einmischen von Füllstoffen in die Latexmischung und anschließende Aufarbeitung können die erfindungsgemäßen Mischungen direkt als Kautschuk-/Füllstoff-Formulierung erhalten werden. Die weitere Abmischung der Kautschukmischung aus doppelbindungshaltigem Kautschuk (A), Kautschukgel (B) und Komponente (C) mit zusötzlichen Füllstoffen sowie gegebenenfalls Kautschukhilfsmitteln kann in üblichen Mischaggregaten, Walzen, Innenmischer oder auch Mischextrudern, durchgeführt werden. Bevorzugte Mischtemperaturen liegen bei 50-180°C.

Die erfindungsgemäßen Kautschukmischungen eignen sich zur Herstellung von Vulkanisaten, insbesondere Formkörpern aller Art, wie Kabelmänteln, Schläuchen, Treibriemen, Förderbändern, Walzenbelägen, Reifen, bevorzugt Reifenlaufflächen, Schuhsohlen, Dichtungsringen und Dämpfungselementen sowie Membranen.

### Beispiele

### Herstellung des SBR-Gel/NR-Masterbatches (KA 8650/19)

Für die Herstellung des SBR-Gel/NR-Masterbatches stellt man zuerst den SBR-Mikrogel-haltigen Latex separat her, mischt diesen mit NR-Latex und koaguliert die Mischung der beiden Latices.

Das SBR-Gel wird ausgehend von Baystal 1357 der Polymer Latex GmbH (früher: Bayer France, Port Jérôme) durch Vernetzung mit Dicumylperoxid hergestellt. Baystal 1357 ist ein nichtcarboxylierter SBR-Latex mit einem Styrolgehalt von 22 Gew.-% und einem Feststoffgehalt von 38 Gew.-%. Der Gelgehalt beträgt 75 Gew.-% und der Quellungsindex des vergelten Anteils beträgt 61 (Nassgewicht/Trockengewicht in Toluol). Die Latexteilchen haben einen Durchmesser von d₁₀=50 nm, d₅₀=56 nm und d₈₀=60 nm. Die Dichte der Latexteilchen beträgt 0,9281 g/cm³. Die Glastemperatur des SBRs liegt bei -57°C.

### 1a) Vernetzung des in Latexform vorliegenden SBR-Kautschuks

Für die Vernetzung mit Dicumylperoxid (DCP) wird der Latex auf eine Feststoffkonzentration von 30 Gew.-% verdünnt und in einen Autoklaven gefüllt. DCP wird in fester Form bei Raumtemperatur zugegeben (1,5 phr bezogen auf Festprodukt). Durch Aufheizen des Latex auf 60°C wird das DCP aufgeschmolzen und unter Rühren gut im Latex verteilt. Zur Entfernung von Sauerstoff wird der Reaktorinhalt bei 60°C unter Rühren evakuiert und Stickstoff aufgepresst. Der Evakuierungs/N2-Begasungszyklus wird 3 mal wiederholt. Danach wird der Reaktor auf 150°C aufgeheizt. Um Latexanbackungen beim Aufheizen zu vermeiden, wird darauf geachtet, dass die Differenz zwischen Mantel- und Innentemperatur 10°C nicht übersteigt. Nach dem Aufheizen wird die Innentemperatur 45 Min. bei mindestens 150°C gehalten. Danach wird der Latex abgekühlt und über ein Monodurtuch filtriert.

Durch die Nachvernetzung mit DCP wird die Teilchengröße des Latex praktisch nicht beeinflusst; der Gelgehalt steigt auf 97,5 % und die Dichte auf 0,9717 g/cm³; der Quellungsindex nimmt auf 5,4 % ab und die Glastemperatur steigt auf -26,5°C.

### 1b) Aufarbeitung des SBR-Mikrogels als NR-Masterbatch

Um eine gute Verteilung der Mikrogele in der späteren Kautschukmatrix sicherzustellen, wird der Mikrogel-Latex als NR-Masterbatch aufgearbeitet, wobei ein NR/Mikrogel-Gewichts-Verhältnis von 50/50 eingestellt wird.

Als NR-Masterbatchkomponente wird Taytex mit einer Feststoffkonzentration von 61 Gew.-% (Importeur: Theodor Durrieu, Hamburg) verwendet.

Vor dem Mischen der beiden Latices wird der NR-Latex durch Zugabe von 5 Gew.-% bez. auf NR an 5 %iger Dresinate 731-Lösung (Natriumsalz der disproportionierten Abietinsäure der Fa. Hercules) versetzt. Danach mischt man den NRund den carboxylierten Gellatex 10 Min. unter intensivem Rühren bei Raumtemperatur.

Nach der Herstellung der Latexmischung wird eine Alterungsschutzmitteldispersion zugegeben. Hierfür wird eine 10 %ige wässrige Dispersion eines aminischen Alterungsschutzmittels verwendet. Zur Stabilisierung von 1 kg Festprodukt verwendet man: 50 g einer Dispersion aus Vulkanox 4020 (N-Isopropyl-N'- phenyl-p-phenylendiamin/Bayer AG) 0,0913 g NaOH und 0,45 g Emulgator T 11 (teilhydrierte Talgfettsäure/Procter & Gamble) und 0,193 g Oulu GP 331 (unmodifizierte Harzsäure/-Veitsiluto, Oulu).

Zur Koagulation wird die stabilisierte Latexmischung bei Raumtemperatur in eine Elektrolytlösung eingerührt, wobei zur Koagulation von 1 kg Festprodukt vorgelegt werden:

Elektrolytlösung aus 11 l Wasser; 150 g Kochsalz; 47 g Al-Sulfat.18 Kristallwasser; 100 g Superfloc (1 %ig).

Die Kautschukkrümel werden insgesamt drei Mal bis zur Chloridfreiheit gewaschen, indem man sie abfiltriert, mit ca. 15 l Lewatitwasser aufschlämmt und unter Rühren auf 95°C erhitzt. Anschließend werden die Kautschukkrümel bei 70°C im Vakuumtrockenschrank bis zur Gewichtskonstanz (ca. 60 h) getrocknet.

### 1c) Compoundherstellung , Vulkanisation und Ergebnisse

Auf der Basis o.g. NR-Masterbatches des SBR-Gels wird folgende Mischungsserie hergestellt und die Eigenschaften der entsprechenden Vulkanisate bestimmt:

### Mischungsserie:

Es wird gezeigt, dass durch Zusätze von Phosphorylpolysulfiden zu gelhaltigen Compounds das Produkt S₃₀₀ x D aus Spannungswert bei 300 % Dehnung (S₃₀₀) und Bruchdehnung (D) verbessert wird. Die Rückprallelastizitäten werden durch diese Zusätze nicht reduziert.

### Mischungsserie:

In einem Laborinnenmischer werden gemäß nachfolgender Rezeptur unterschiedliche Compounds auf der Basis des SBR/NR-Masterbatches hergestellt (Angaben jeweils bezogen auf 100 Gew.-Teile Kautschuk/phr). Die Mischungskomponenten werden in der in der Tabelle angegebenen Reihenfolge gemischt:

| Mischungs-Nr.: | 1 | 2 | 3 | 4 | 5 |
|---|---|---|---|---|---|
| TSR 5, Defo 700 ¹⁾ | 25 | 25 | 25 | 100 | 50 |
| NR-Materbatch mit 50 Gew.-% SBR-Mikrogel | 150 | 150 | 150 | 0 | 100 |
| Ruß N121 | 0 | 0 | 0 | 25 | 25 |
| Ozonschutzwachs²⁾ | 1,5 | 1,5 | 1,5 | 1,5 | 1,5 |
| Stearinsäure | 3 | 3 | 3 | 3 | 3 |
| Zinkoxid | 3 | 3 | 3 | 3 | 3 |
| IPPD³⁾ | 1 | 1 | 1 | 1 | 1 |
| TMQ ⁴⁾ | 1 | 1 | 1 | 1 | 1 |
| Schwefel | 1,6 | 1,6 | 1,6 | 1,6 | 1,6 |
| TBBS⁵⁾ | 1 | 2 | 1 | 1 | 1 |
| Zink-Phosphorylpolysulfid ⁶⁾ | 0 | 4 | 2 | 4 | 4 |
| Phosphorylpolysulfid ⁷⁾ | 0 | 0 | 2,3 | 0 | 0 |

| | | | | | |
|---|---|---|---|---|---|
| 1) = TSR 5, Defo 700 (mastizierter Naturkautschuk mit Defo-Härte 700) | | | | | |
| 2) = Antilux L® der Fa. Rheinchemie | | | | | |
| 3) = N-Isopropyl-N'-phenyl-p-phenylendiamin (Vulkanox®4010 NA der Bayer AG) | | | | | |
| 4)) = 2,2,4-Trimethyl-1,2-dihydrochinolin/polym. (Vulkanox® HS der Bayer AG) | | | | | |
| 5) = N-tert.Butyl-2-benzthiazylsulfenamid (Vulkacit NZ der Bayer AG) | | | | | |
| 6) = Zink-bis(O,O-2-Ethylhexyl)dithiophosphat (Rhenocure® ZDT/G /50%ig) | | | | | |
| 7) = Bis(O,O-2-Ethylhexylthiophosphoryl)polysulfid (Rhenocure® SDT/G/50%ig) | | | | | |

Charakteristische Eigenschaften der Compounds 1)-5) sind in folgender Tabelle zusammengefasst:

| Mischungs-Nr.: | 1 | 2 | 3 | 4 | 5 |
|---|---|---|---|---|---|
| Mischungs-Viskosität/ML 1+4 [ME] | 59,7 | 53,5 | 49,9 | 55 | 60,5 |
| Mooneyrelaxation/MR30 [%] | 7,0 | 4,8 | 3,2 | 5,9 | 6,3 |

In einem Rheometerexperiment bei 160°C mit einem Rheometer 100 der Fa. Monsanto werden charakteristische Vulkanisationszeiten wie z.B.t₁₀, t₅₀, t₉₀ t₉₅ sowie charakteristische Drehmomente wie Sₘₐₓ. und Sₘᵢₙ. bestimmt.

| Mischungs-Nr.: | 1 | 2 | 3 | 4 | 5 |
|---|---|---|---|---|---|
| ts01 [min] | 4,8 | 3,2 | 2,8 | 1,7 | 1,9 |
| t10 [min] | 5 | 3,3 | 3 | 1,9 | 2,1 |
| t50 [min] | 7,7 | 4,4 | 4,2 | 2,5 | 2,8 |
| t90 [min] | 11,5 | 7,1 | 6,7 | 4,6 | 5 |
| t95 [min] | 13,4 | 8,6 | 8,2 | 5,3 | 6,1 |
| Smax. [Nm] | 13,7 | 14,5 | 15,6 | 17,3 | 19,0 |
| Smin. [Nm] | 3,0 | 2,8 | 2,6 | 3,2 | 3,0 |

Die Compounds werden 9 Minuten bei 160°C in einer Presse vulkanisiert.

Es werden folgende Prüfergebnisse erhalten:

| Mischungs-Nr.: | 1 | 2 | 3 | 4 | 5 |
|---|---|---|---|---|---|
| Zugfestigkeit [MPa] | 18,9 | 19,0 | 18,5 | 18,2 | 20,8 |
| Bruchdehnung (D) [%] | 485 | 465 | 430 | 510 | 400 |
| Spannungswert bei 100 % Dehnung (S₁₀₀) [MPa] | 1,8 | 1,7 | 2,0 | 1,9 | 2,6 |
| Spannungswert bei 300 % Dehnung (S₃₀₀) [MPa] | 7,5 | 8,4 | 9,7 | 11,5 | 13,6 |
| Härte Shore A, 23°C | 61 | 61 | 62 | 63 | 67 |
| Härte Shore A, 70°C | 54 | 54 | 56 | 58 | 61 |
| Rückprallelastizität, 23°C [%] | 35 | 37 | 38 | 35 | 36 |
| Rückprallelastizität, 70°C [%] | 60 | 63 | 65 | 59 | 60 |
| Abrieb 40er Schmirgel [mm³] | 225 | 240 | 275 | 218 | 210 |
| Abrieb 60er Schmirgel [mm³] | 140 | 155 | 130 | 142 | 135 |
| S₃₀₀ x D | 3638 | 3906 | 4171 | 5865 | 5440 |

## Patentansprüche

1. Kautschukmischungen aus mindestens einem doppelbindungshaltigen Kautschuk (A), mindestens einem Kautschukgel (B) und mindestens einer Komponente (C), ausgewählt aus der Gruppe, die aus einem Phosphorylpolysulfid und einer Verbindung der allgemeinen Formel (II) 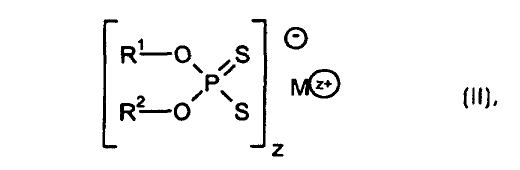 besteht, worin
R¹ und R² gleich oder verschieden sind und für aliphatische, heteroaliphatische, aromatische und heteroaromatische Substituenten mit 1 bis 24 C-Atomen, und 1 bis 4 Heteroatome stehen, z für ganze Zahlen von 1 bis 3 steht, und M^{z+} ein Metallkation mit der Ladung z⁺, mit z⁺ = 1 bis 3, bedeutet, wobei der Anteil an doppelbindungshaltigem Kautschuk (A) 100 Gew.-Teile, der Anteil an Kautschukgel (B) 5 bis 150 Gew.-Teile, und der Anteil an Komponente (C) 0,1 bis 10 Gew.- Teile, beträgt, sowie gegebenenfalls weiteren Füllstoffen und Kautschukhilfsmitteln.

2. Mischungen nach Anspruch 1, **dadurch gekennzeichnet, dass** das Kautschukgel auf einem Kautschuk auf Basis von Polychloropren (CR), Naturkautschuk (NR), Nitrilkautschuk (NBR), Polybutadienkoutschuk (BR) sowie Styrol/Butadienkautschuk (SBR) beruht.

3. Mischungen nach den Ansprüchen 1 und 2, **dadurch gekennzeichnet, dass** die Komponente (C) aus Zink-bis(O,O-2-Ethylhexyl)dithiophosphat und/oder Bis(O,O-2-Ethylhexylthiophosphoryl)polysulfid ausgewählt wird.

4. Verwendung der Kautschukmischungen nach einem der Ansprüche 1 bis 3 zur Herstellung von Kautschukvulkanisaten, insbesondere von Kautschukformkörpern aller Art.

## Claims

1. Rubber mixtures of at least one rubber (A) containing double bonds, at least one rubber gel (B) and at least one component (C) selected from the group comprising a phosphoryl polysulfide and a compound of the general formula (II) 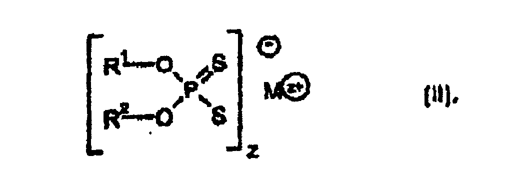 wherein
R¹ and R² are identical or different and denote aliphatic, heteroaliphatic, aromatic and heteroaromatic substituents with 1 to 24 C atoms and 1 to 4 heteroatoms, z denotes integers from 1 to 3 and M^{z+} denotes a metal cation of charge z⁺ where z⁺ = 1 to 3, in which the proportion of rubber (A) containing double bonds is 100 parts by weight, the proportion of rubber gel (B) is 5 to 150 parts by weight, and the proportion of component (C) is 0.1 to 10 parts by weight, as well as optionally further fillers and rubber auxiliary substances.

2. Mixtures according to claim 1, **characterised in that** the rubber gel is based on a rubber based on polychloroprene (CR), natural rubber (NR), nitrile rubber (NBR), polybutadiene rubber (BR) as well as styrene/butadiene rubber (SBR).

3. Mixtures according to claims 1 and 2, **characterised in that** the component (C) is selected from zinc bis(O,O-2-ethylhexyl)dithiophosphate and/or bis(O,O-2-ethylhexylthiophosphoryl)polysulfide.

4. Use of the rubber mixtures according to one of claims 1 to 3 for the production of rubber vulcanisates, in particular all types of rubber moulded articles.

## Revendications

1. Mélanges de caoutchoucs d'au moins un caoutchouc contenant des doubles liaisons (A), d'au moins un gel de caoutchouc (B) et d'au moins un composant (C) choisi dans le groupe qui consiste en un polysulfure de phosphoryle et un composé de formule générale (II) 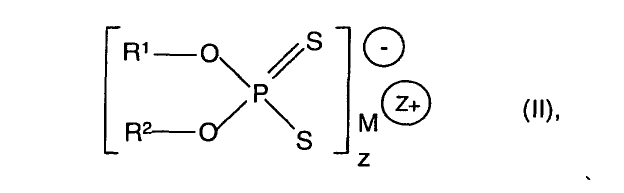 où
R¹ et R² sont identiques ou différents et représentent des substituants aliphatiques, hétéroaliphatiques, aromatiques et hétéroaromatiques ayant 1 à 24 atomes de carbone, et 1 à 4 hétéroatomes, z représente des nombres entiers de 1 à 3, et M^{z+} représente un cation métallique de charge z⁺, avec z⁺ = 1 à 3,
où la proportion de caoutchouc contenant des doubles liaisons (A) est 100 parties en masse, la proportion de gel de caoutchouc (B) est 5 à 150 parties en masse et la proportion de composant (C) est 0,1 à 10 parties en masse, ainsi éventuellement que d'autres charges et adjuvants de caoutchoucs.

2. Mélanges selon la revendication 1 **caractérisés en ce que** le gel de caoutchouc est basé sur un caoutchouc à base de polychloroprène (CR), de caoutchouc naturel (NR), de caoutchouc nitrile (NBR), de caoutchouc de polybutadiène (BR) ainsi que le caoutchouc de styrène/butadiène (SBR).

3. Mélanges selon les revendications 1 et 2 **caractérisés en ce que** le composant (C) est choisi parmi le bis(O,O-2-éthylhexyl)dithiophosphate de zinc et/ou le polysulfure de bis(O,O-2-éthylhexylthiophosphoryle).

4. Utilisation des mélanges de caoutchoucs selon l'une des revendications 1 à 3 pour la production de vulcanisats de caoutchouc et en particulier de corps mis en forme de tout type.
